# EUROPEAN PATENT SPECIFICATION

(11) **EP 2 601 876 B1**
(45) Date of publication and mention of the grant of the patent: **07.12.2016**
(21) Application number: 11814246.2
(22) Date of filing: 13.07.2011
(51) Int. Cl.: A47L 9/20, A47L 9/16

(54) **ELECTRIC VACUUM CLEANER**
ELEKTRISCHER STAUBSAUGER
ASPIRATEUR ÉLECTRIQUE

(30) Priority: 05.08.2010 JP 2010175962
(43) Date of publication of application: 12.06.2013
(73) Proprietor: Panasonic Corporation, Osaka 571-8501 (JP)
(72) Inventor: KUNIMOTO, Keijirou, Chuo-ku Osaka 540-6207 (JP); YAMAURA, Izumi, Chuo-ku Osaka 540-6207 (JP); OHTA, Katsuyuki, Chuo-ku Osaka 540-6207 (JP)
(74) Representative: Schwabe - Sandmair - Marx
(86) International application number: PCT/JP2011/003997
(87) International publication number: WO 2012/017606

(56) References cited:
- EP-A1- 1 464 266
- EP-A2- 0 860 554
- JP-A- 55 081 630
- JP-A- 2004 248 898
- JP-A- 2009 247 769
- JP-A- 2011 041 732
- US-A- 3 708 962
- US-A- 4 787 923

## Description

### TECHNICAL FIELD

The present invention relates to an electric vacuum cleaner equipped with a filter for filtering dust.

### BACKGROUND ART

Conventionally, a method of applying vibration to a filter to remove dust has been proposed as means for preventing the filter from getting clogged in the field of electric vacuum cleaner. For example, there has been proposed a vacuum cleaner including a dust removing unit for vibrating a plurality of nail parts fitted to each corrugation in a filter in which a cross-section is bent in a wave form to form a plurality of corrugations (see e.g., Patent Literature 1).

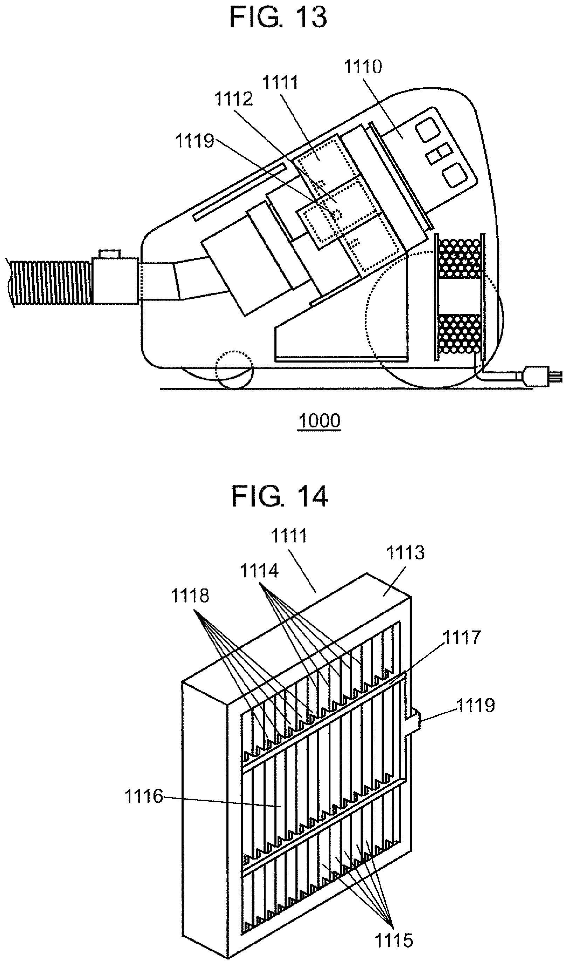

FIG. 13 is a schematic view showing a schematic configuration of conventional electric vacuum cleaner 1000. FIG. 14 is a perspective view showing a configuration of filter device 1111 in conventional electric vacuum cleaner 1000.

As shown in FIG. 13 and FIG. 14, electric vacuum cleaner 1000 includes filter device 1111 for catching dust suctioned by electric blower 1110, and vibrator 1112 for vibrating filter device 1111. Filter device 1111 is vibrated by vibrator 1112 to remove the dust caught by filter device 1111 before driving of or after driving of electric blower 1110.

Filter device 1111 includes square casing frame 1113, sheet body 1116, and vibration transmitting member 1117. Sheet body 1116 is internally arranged in casing frame 1113, and is formed with a plurality of projections 1114 and recesses 1115 by being bent in a wavelike form. Vibration transmitting member 1117 transmits vibration of vibrator 1112 to sheet body 1116.

Vibrator 1112 internally includes a vibration motor, and is arranged next to filter device 1111.

Vibration transmitting member 1117 includes a plurality of nail parts 1118 fitted to each one of the plurality of recesses 1115 of sheet body 1116, and transmitting projection 1119 for directly receiving the vibration from vibrator 1112.

The vibration of vibrator 1112 is transmitted from transmitting projection 1119 to vibration transmitting member 1117, and such vibration is transmitted from nail parts 1118 to sheet body 1116. Accordingly, the dust caught by sheet body 1116 can be removed.

In such conventional electric vacuum cleaner 1000, however, improvements still can be made in higher efficiency of the dust removing performance and lower noise.

In other words, vibrator 1112 is arranged next to filter device 1111 in conventional electric vacuum cleaner 1000, as described above. The vibration of vibrator 1112 thus tends to vibrate entire filter device 1111 at the same time as vibrating transmitting projection 1119. Therefore, vibration energy of vibrator 1112 is diffused not only to filter device 1111, but also to entire electric vacuum cleaner 1000 supporting filter device 1111.

Furthermore, as described above, the vibration from vibrator 1112 is transmitted to transmitting projection 1119 of vibration transmitting member 1117 to vibrate nail parts 1118, and then transmitted to sheet body 1116. Thus, a transmission loss until the vibration of vibrator 1112 is transmitted to sheet body 1116 is large, and the vibration tends to attenuate.

Therefore, in order to vibrate sheet body 1116 and realize sufficient dust removing performance, an output of a vibration generating source needs to be raised, which inevitably enlarges vibrator 1112.

Furthermore, since transmitting projection 1119 of vibration transmitting member 1117 directly receives the vibration of vibrator 1112, an impact noise is generated thus generating noise.

### Citation List

### Patent Literature

PTL 1: Japanese Unexamined Patent Publication No. 2004-121621

EP 1 464 266 A1 relates to a pneumatic filter-shaking device for vacuum cleaners. Said filter-shaking device comprising a sleeve, connectable to supply means of a compressed air flow and provided with at least one air discharge vent, and a piston sliding inside said sleeve, connected to elastic return means and fitted with a shank extending beyond the end of said sleeve, wherein the reciprocating motion of said piston causes the opening and closing of the air discharge vent and also causes the shaking of the filter through said shank.

### SUMMARY OF THE INVENTION

It is an object of the present invention to provide an improved and useful electric vacuum cleaner in which the above-mentioned problems are eliminated. In order to achieve the above-mentioned object, there is provided an electric vacuum cleaner according to claim 1. Advantageous embodiments are defined by the dependent claims.

Advantageously, an electric vacuum cleaner includes an electric blower; a filter for catching dust suctioned by the electric blower; and a dust removing unit for removing the dust attached to the filter. The dust removing unit includes a driving unit including a regulating portion for linear driving, and being adapted to reciprocatingly drive, a dust removing element being arranged close to the filter and being movable in a direction substantially identical to a direction of the reciprocating driving of the driving unit, and an elastic member being adapted to transmit the reciprocating driving of the driving unit to the dust removing element through an elastic body. An amplitude of the reciprocating driving of the dust removing element is increased by a resonance action generated by the elastic member to vibrate the filter.

### BRIEF DESCRIPTION OF DRAWINGS

FIG. 1 is a side view showing an outer appearance of an electric vacuum cleaner according to a first exemplary embodiment of the present invention.
FIG. 2 is a cross-sectional view showing a configuration of main parts of a main body of the electric vacuum cleaner according to the first exemplary embodiment of the present invention.
FIG. 3 is a perspective view showing a configuration of a filter and a dust removing unit of the electric vacuum cleaner according to the first exemplary embodiment of the present invention.
FIG. 4A is a plan view showing a configuration of the filter and the dust removing unit of the electric vacuum cleaner according to the first exemplary embodiment of the present invention.
FIG. 4B is a cross-sectional view showing the configuration of the filter and the dust removing unit of the electric vacuum cleaner according to the first exemplary embodiment of the present invention.
FIG. 4C is a cross-sectional view showing the configuration of the filter and the dust removing unit of the electric vacuum cleaner according to the first exemplary embodiment of the present invention.
FIG. 5 is a view describing gap C of a nail part of a dust removing element and a film body of the filter of the electric vacuum cleaner according to the first exemplary embodiment of the present invention.
FIG. 6 is a characteristic diagram showing a temporal change in strokes of a driving unit and the dust removing element of the electric vacuum cleaner according to the first exemplary embodiment of the present invention.
FIG. 7 is a view showing vibration characteristics of the dust removing element of the electric vacuum cleaner according to the first exemplary embodiment of the present invention.
FIG. 8 is a partial cross-sectional view showing a configuration of a filter and a dust removing unit in an electric vacuum cleaner according to a second exemplary embodiment of the present invention.
FIG. 9 is a cross-sectional view showing a configuration of a filter and a dust removing unit in an electric vacuum cleaner according to a third exemplary embodiment of the present invention.
FIG. 10 is a perspective view showing a configuration of a dust removing element in the electric vacuum cleaner according to the third exemplary embodiment of the present invention.
FIG. 11 is a perspective view showing a configuration of a filter and a dust removing unit of an electric vacuum cleaner according to a fourth exemplary embodiment of the present invention.
FIG. 12A is a front view showing a configuration of the filter and the dust removing unit of the electric vacuum cleaner according to the fourth exemplary embodiment of the present invention.
FIG. 12B is a cross-sectional view showing the configuration of the filter and the dust removing unit of the electric vacuum cleaner according to the fourth exemplary embodiment of the present invention.
FIG. 12C is a cross-sectional view showing the configuration of the filter and the dust removing unit of the electric vacuum cleaner according to the fourth exemplary embodiment of the present invention.
FIG. 13 is a schematic view showing a schematic configuration of a conventional electric vacuum cleaner.
FIG. 14 is a perspective view showing a configuration of a filter device in the conventional electric vacuum cleaner.

### DESCRIPTION OF EMBODIMENTS

Hereinafter, exemplary embodiments of the present invention will be described with reference to the drawings. The same reference numerals may be denoted on the same or corresponding portions to omit the redundant description.

### FIRST EXEMPLARY EMBODIMENT

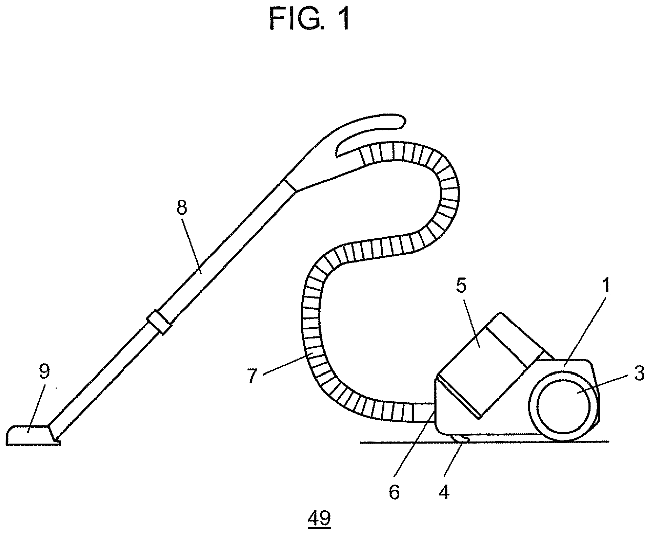

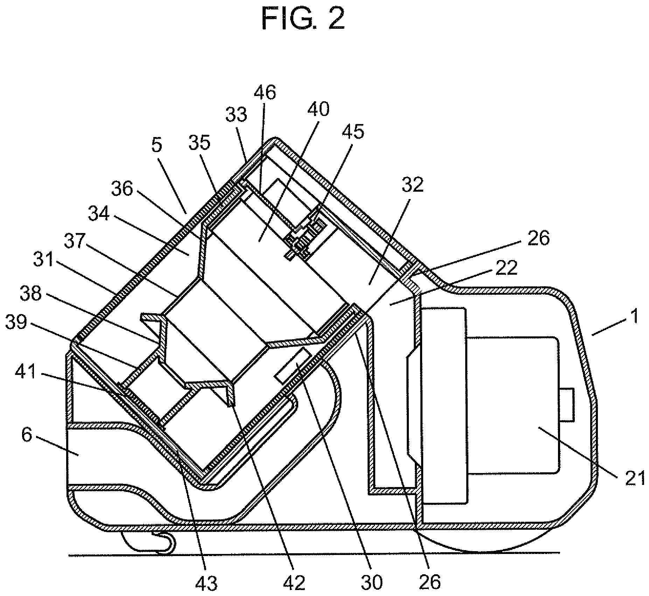

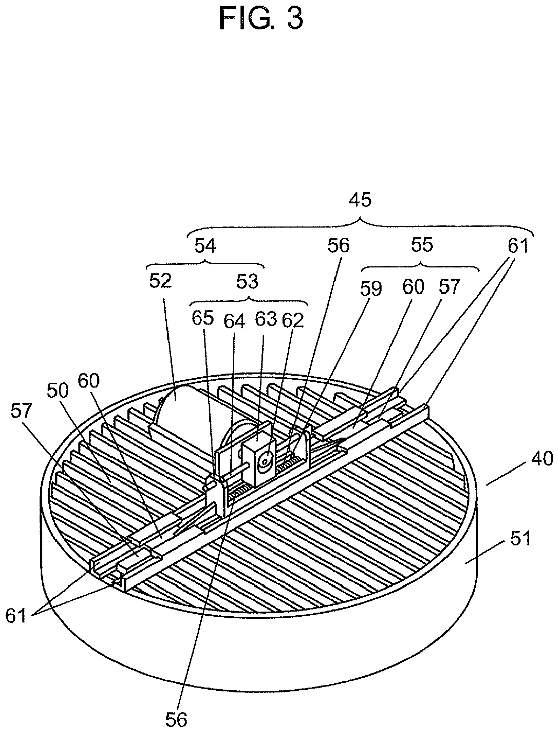

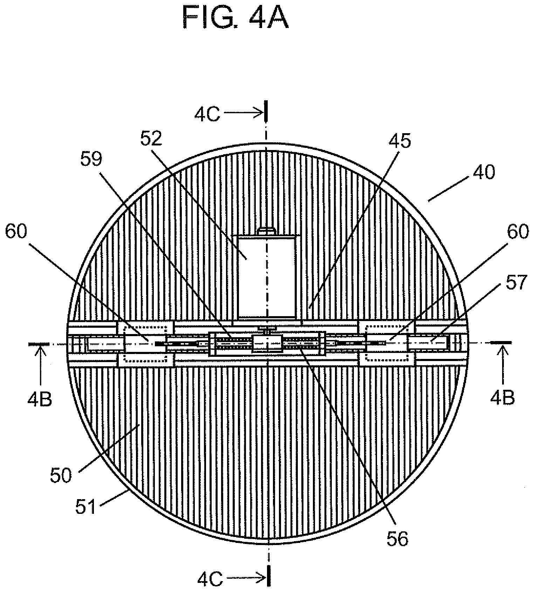

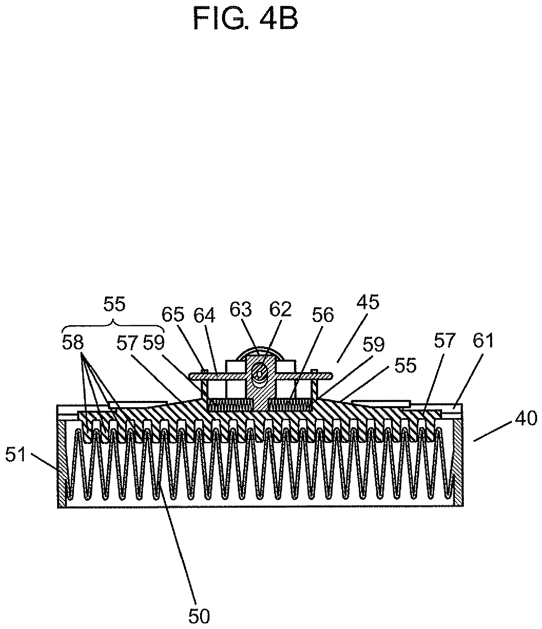

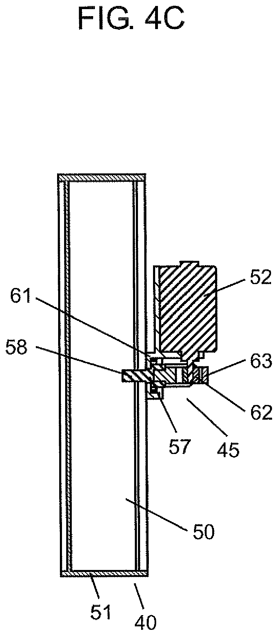

FIG. 1 is a side view showing an outer appearance of electric vacuum cleaner 49 according to a first exemplary embodiment of the present invention. FIG. 2 is a cross-sectional view showing a configuration of main parts of a main body of electric vacuum cleaner 49. FIG. 3 is a perspective view showing a configuration of filter 40 and dust removing unit 45 of electric vacuum cleaner 49. FIG. 4A is a plan view showing a configuration of filter 40 and dust removing unit 45 of electric vacuum cleaner 49. FIG. 4B is a cross-sectional view showing the configuration of filter 40 and dust removing unit 45 of electric vacuum cleaner 49. FIG. 4C is a cross-sectional view showing the configuration of filter 40 and dust removing unit 45 of electric vacuum cleaner 49.

As shown in FIG. 1, wheel 3 and caster 4 are attached to an exterior of vacuum cleaner main body 1 of electric vacuum cleaner 49, so that vacuum cleaner main body 1 can freely move on a floor surface. Suction hose 7 and extended tube 8 are sequentially connected to suction port 6 arranged on a lower side of an installed portion of dust collecting case 5. Suction tool 9 is attached to a distal end of extended tube 8.

As shown in FIG. 2, electric blower 21 is incorporated in vacuum cleaner main body 1. On an upstream side of electric blower 21, dust collecting case 5 is detachably arranged with respect to vacuum cleaner main body 1 through partition wall 26 having ventilation port 22. By operating electric blower 21, dust on a floor surface of a house can be suctioned into vacuum cleaner main body 1. Dust collecting case 5 introduces air containing the suctioned dust, centrifugally separates and deposits the dust, and filters the microscopic dust. The filter air is exhausted from an exhaust outlet (not shown) on a downstream of electric blower 21 (cyclone-type vacuum cleaner).

Dust collecting case 5 includes dust collecting box 31 of hollow cylindrical shape having intake port 30 and being arranged on a lower side, and dust collecting lid 33 having exhaust port 32 and being arranged on the upper side. Dust collecting case 5 is configured such that intake port 30 and suction port 6 of vacuum cleaner main body 1 are communicated with each other and exhaust port 32 and ventilation port 22 of the vacuum cleaner main body 1 are communicated with each other while being attached to vacuum cleaner main body 1.

Dust collecting box 31 internally includes middle case 34 having a shape in which a hollow cylinder and a hollow circular cone of different diameters are overlapped in multi-stages. Middle case 34 is configured with filter accommodation case 35, inclined tube A 36, primary filter 37, inclined tube B 38, and fine dust tube 39 continuously connected in order from the top.

Filter accommodation case 35 has a hollow cylindrical shape and internally accommodates filter 40, and is accommodated such that an outer periphery lies along an upper end portion of an inner surface of dust collecting box 31. An outer surface of filter accommodation case 35 and an inner surface of dust collecting box 31 are formed so as to block a gap with a seal member (not shown).

Inclined tube A 36 has a hollow circular cone shape, and internally includes an inclined plane for guiding the dust dropped from filter 40 to primary filter 37, inclined tube B 38, and fine dust tube 39 when removing the dust caught by filter 40.

Primary filter 37 has a cylindrical shape with microscopic through-holes over the entire surface to pass the air from the outer periphery of the cylinder to the interior of the cylinder to filter dust (rough dust) of a relatively large size such as cotton dust and hair from the dust in suctioned airflow.

Inclined tube B 38 has a hollow circular cone shape, similarly to inclined tube A 36, and internally includes an inclined plane for guiding the dust dropped from filter 40 to fine dust tube 39.

Fine dust tube 39 has a hollow cylindrical shape and is provided to internally hold the dust guided from inclined tube B 38. Packing 41 for sealing a space formed with a bottom surface of fine dust tube 39 is arranged at a bottom inner surface of dust collecting box 31.

Intake port 30 is opened such that the suctioned airflow flows in a tangent direction of the inner surface of dust collecting box 31. The suctioned airflow whirls in a flow path configured by a gap between the respective outer surfaces of inclined tube A 36, primary filter 37, inclined tube B 38, and fine dust tube 39, and the inner surface of dust collecting box 31. The suctioned airflow is ultimately suctioned into the cylinder by primary filter 37 to flow toward filter 40.

The dust in the suctioned airflow flowing into dust collecting box 31 from intake port 30 is moved to the lower part of dust collecting box 31 while whirling so as to be pushed against the inner surface of dust collecting box 31 by a centrifugal force, and is accumulated at the bottom of dust collecting box 31. Canopy-like portion 42 is arranged at the lower part of primary filter 37 so that the accumulated dust is not flung up. In other words, the portion below canopy-like portion 42 is an accumulating portion of the dust, and the portion above canopy-like portion 42 is a centrifugal separating portion.

Bottom lid 43 that can freely open/close is attached to the bottom of dust collecting box 31. When discarding the dust accumulated in dust collecting box 31, the dust can be easily thrown away by opening bottom lid 43. Furthermore, the dust accumulated in fine dust tube 39 can be discarded at the same time since the bottom of fine dust tube 39 is also opened.

Majority of the dust (fine dust) that is less likely to be centrifugally separated and that has a fine particle diameter such as sand dust, pollen, mite feces, and the like is passed through primary filter 37 with an airflow to flow to filter 40. Such dust (fine dust) is filtered by filter 40 to be attached to and deposited on the surface of filter 40, where one part thereof entangles with the rough dust deposited at the bottom of dust collecting box 31 and accumulates thereat.

Dust collecting lid 33 has a cylindrical shape, and is attached to an upper part of dust collecting box 31 while maintaining an airtight state. Dust collecting lid 33 internally accommodates dust removing unit 45 for removing the dust attached to filter 40 by vibration. Electrical components are accommodated in inner lid 46.

The electrical components include a print substrate, a power supplying terminal, a charging component, a motor driver element, an ON/OFF switch, and the like. Electricity is accumulated in a charging component from vacuum cleaner main body 1 through a power supplying terminal. Dust removing unit 45 is driven by power from the charging component. Drive control of dust removing unit 45 is driven by any one of an instruction from a micro-computer (not shown) in vacuum cleaner main body 1 and an instruction from an ON/OFF switch (not shown) of dust collecting lid 33.

Thus, due to the operation of the charging component, dust removing unit 45 operates even in a state in which it is not connected to an electrical outlet (not shown) or in a state in which dust collecting case 5 is detached from vacuum cleaner main body 1.

Next, the configuration of filter 40 and dust removing unit 45 will be described in detail based on FIG. 3, FIG. 4A, FIG. 4B, and FIG. 4C.

Dust removing unit 45 is arranged parallel to filter 40 on a downstream (upper part) of disc-shaped filter 40.

Filter 40 may be non-woven cloth, pulp, glass fiber, or HEPA (High Efficiency Particulate Air) filter. In the present exemplary embodiment, film body 50 formed by folding a filtering film, in which a PTFE (PolyTetraFluoroEthylene) film excelling in dust separating property is stacked on a non-woven cloth, in a wave form to form corrugations is integrally molded with resin on the inner side of cylindrical frame body 51.

Dust removing unit 45 includes driving unit 54, dust removing element 55, rail 61, and elastic member 56. Driving unit 54 includes electric motor 52 and regulating portion 53. Regulating portion 53 converts rotation of electric motor 52 to reciprocating linear driving. Regulating portion 53 includes eccentric cam 62, movable element 63, guide pin 64, and guide hole 65. Dust removing element 55 includes bone part 57, nail part 58, groove part 59, and guide blade part 60.

Dust removing element 55 is arranged such that a longitudinal direction thereof becomes orthogonal to the tangent direction of the corrugation of filter 40. Elastic member 56 transmits the reciprocating driving of driving unit 54 to dust removing element 55 via two compression springs (elastic bodies).

A plurality of nail parts 58 to be arranged in a valley of each corrugation of filter 40 are arranged on a lower side of square bar-shaped bone part 57 arranged toward a driving direction of driving unit 54 (see FIG. 4B). Dust removing element 55 includes groove part 59 configured in the longitudinal direction at the middle of the upper part thereof, and includes guide blade part 60 on front and back of bone part 57. Dust removing element 55 freely moves along rail 61 by fitting guide blade part 60, in a freely slidably moving manner, to rail 61 arranged on both sides of bone part 57.

Rail 61 is supported by inner lid 46 shown in FIG. 2, where both ends thereof have a function of holding down and fixing frame body 51 of filter 40 from above. Furthermore, a supporting portion of electric motor 52 is also supported by inner lid 46, similarly to rail 61.

Regulating portion 53 includes eccentric cam 62 securely arranged on a shaft center of electric motor 52, and movable element 63, inscribing eccentric cam 62, for converting the rotation to the reciprocating driving. Movable element 63 has one end of the lower part arranged in a freely slidably moving manner in groove part 59 of dust removing element 55, where guide pin 64 arranged to be movable in the front and back direction is fitted, in a freely slidably moving manner, to guide hole 65 formed at both ends of groove part 59 of dust removing element 55.

The two compression springs, which are elastic bodies, of elastic member 56 are compression coil springs made of metal, and are installed in groove part 59 and biased to sandwich movable element 63. Elastic member 56 stretches when movable element 63 is driven in groove part 59, where the movement is transmitted to dust removing element 55 via the compression springs.

The difference between a set length and a compressed length of the compression spring, that is, the tolerable deformation amount of the spring is desirably set to be greater than a reciprocating stroke of movable element 63. This is to prevent electric motor 52 from being locked and damaging a motor winding when dust removing element 55 stops operating due to some failure.

In the above configuration, eccentric cam 62 is rotated when electric motor 52 is operated. Thus, movable element 63 is reciprocatingly driven along groove part 59 at a stroke (e.g., 2 mm) of twice the eccentric amount (e.g., 1 mm) of electric motor 52 and eccentric cam 62. The compression spring expands and contracts with the motion of movable element 63, whereby a difference is generated in the biasing force of the two compression springs with respect to dust removing element 55, and dust removing element 55 is driven along rail 61. Nail part 58 of dust removing element 55 makes contact with the side surface of the corrugation of filter 40 to vibrate the corrugation.

In this case, dust removing element 55 and movable element 63 move in the same linear direction, and the compression spring also expands and contracts in the same direction, and hence the direction of driving coincides and the transmission loss is reduced. Furthermore, filter 40 can be efficiently vibrated since filter 40 is arranged such that the driving direction of nail part 58 is orthogonal to the corrugation of filter 40.

Gap C is formed between nail part 58 of dust removing element 55 and film body 50 of filter 40.

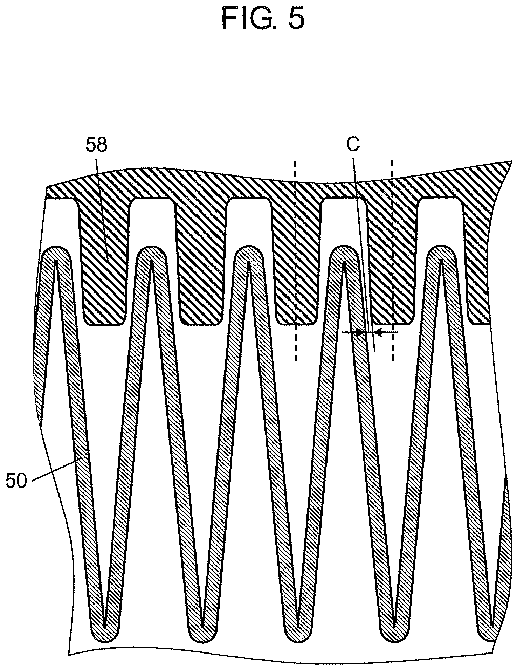

FIG. 5 is a view describing gap C of nail part 58 of dust removing element 55 and film body 50 of filter 40 of electric vacuum cleaner 49 according to the first exemplary embodiment of the present invention. As shown in FIG. 5, gap C is a gap on one side at the distal end of a surface of filter 40 and nail part 58 of dust removing element 55 when a center of a valley portion of a pleat of filter 40 coincides with a center of nail part 58. Gap C is a condition for dust removing element 55 to freely move and for filter 40 to not inhibit the resonance of dust removing element 55. In the present exemplary embodiment, about 80% (e.g., 0.8 mm) of 1/2 of the reciprocating stroke of movable element 63 is set for gap C. If gap C is between 20% and 150% (10% to 75% of reciprocating stroke of movable element 63) of 1/2 (eccentric amount of electric motor 52 and eccentric cam 62) of the reciprocating stroke of movable element 63, dust removing element 55 resonates and a dust removing effect of filter 40 is enhanced. In order to further enhance the effect, gap C is desirably between 50% and 120% (25% to 60% of reciprocating stroke of movable element 63) of 1/2 (eccentric amount of electric motor 52 and eccentric cam 62) of the reciprocating stroke of movable element 63.

Gap C not only improves the resonance condition of dust removing element 55, but an inertia force of dust removing element 55 generated by gap C when nail part 58 makes contact with film body 50 can also act on film body 50. Thus, a strong vibration can be generated on filter 40, and the dust removing performance can be further enhanced.

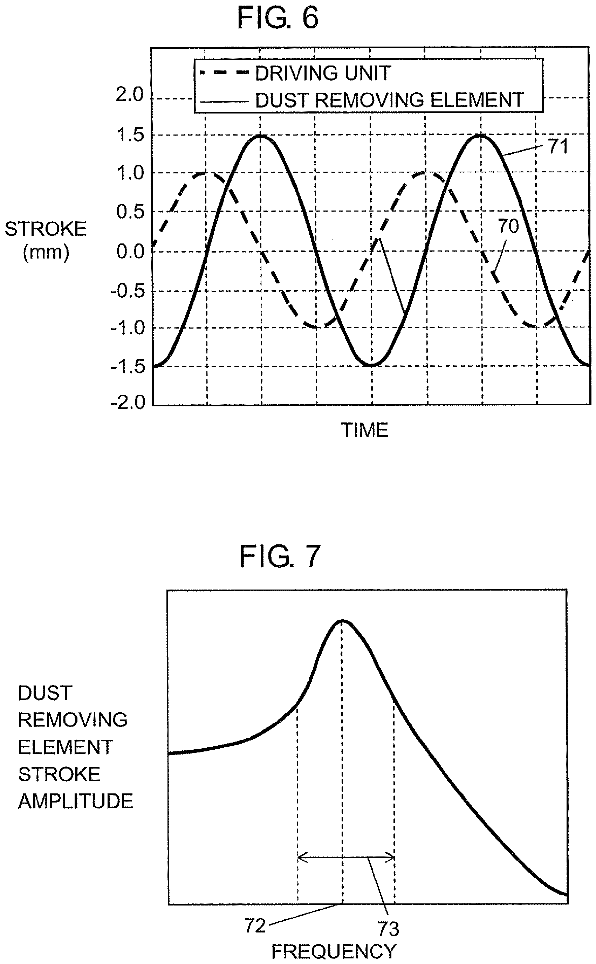

Next, the dust removing operation will be described with reference to FIG. 6 and FIG. 7. FIG. 6 is a characteristic diagram showing a temporal change in the strokes of driving unit 54 and dust removing element 55 of electric vacuum cleaner 49 according to the first exemplary embodiment of the present invention, and FIG. 7 is a view showing vibration characteristics of dust removing element 55 of electric vacuum cleaner 49.

As shown in FIG. 6, stroke 70 of the reciprocating driving of movable element 63 of driving unit 54 sinusoidally changes at an amplitude (2 mm) of twice the eccentric amount (1 mm in present exemplary embodiment) of electric motor 52 and eccentric cam 62. The period matches the rotation period of electric motor 52.

Stroke 71 of the operation of dust removing element 55 has a period the same as the period of stroke 70 of movable element 63 of driving unit 54. However, since the compression spring is stretched and dust removing element 55 is driven, a phase is shifted by such an amount. The amplitude satisfies the resonance condition due to the arrangement of the compression spring, and the amplitude of the stroke of dust removing element 55 increases by being driven at a frequency close to resonance frequency 72, as shown in FIG. 7. Therefore, an operation frequency of driving unit 54 is set in resonance frequency region 73 where the amplitude of stroke 71 of dust removing element 55 becomes greater than the amplitude of stroke 70 of driving unit 54.

Generally, resonance frequency 72 is determined by the mass of vibration body and the rigidity of the spring supporting the vibration body. Resonance frequency 72 lowers when the mass becomes greater, and resonance frequency 72 rises when the rigidity of the spring becomes greater. Therefore, resonance frequency 72 is determined by the mass of dust removing element 55 and a spring constant of the compression spring. However, resonance frequency 72 changes by influential factors on resonance such as gap C of filter 40 and dust removing element 55, rigidity of filter 40, slidably moving resistance of dust removing element 55, and the like. Thus, adjustment by actual measurement is desired when setting the frequency.

As described above, in the present exemplary embodiment, the amplitude of the reciprocating driving of dust removing element 55 is increased by the resonance action generated by the compression spring of elastic member 56 to vibrate filter 40. Thus, the dust removing action on filter 40 of dust removing element 55 increases, and efficient dust removal can be carried out.

In the present exemplary embodiment, the reciprocating driving of driving unit 54 is transmitted to dust removing element 55 through elastic member 56, so that an impact noise is not generated between driving unit 54 and dust removing element 55. Therefore, electric vacuum cleaner 49 capable of removing the dust attached to filter 40 with low noise and at high efficiency can be provided.

The configuration and the effects of filter 40 of electric vacuum cleaner 49 according to the present exemplary embodiment has been described above, but the type of filter 40 of the electric vacuum cleaner of the present invention is not limited to the pleat filter described above. For example, a flat plate shaped filter may be used, and effects similar to a case of using the pleat filter can be obtained as long as the vibration of dust removing element 55 is transmitted.

In the present exemplary embodiment, an example of using electric motor 52 and eccentric cam 62 for the configuration of driving unit 54 has been described, but means capable of linear reciprocating driving such as a linear motor may be used.

Furthermore, in the present exemplary embodiment, an example in which a metal pressure spring is used for the elastic body of elastic member 56 has been described, but a spring made of resin may be used, or a pneumatic spring such as a bellows or a piston cylinder enclosing gas may be used.

In the present exemplary embodiment, an example has been described in which a configuration of converting the rotation of electric motor 52 to reciprocating driving by movable element 63 inscribed to eccentric cam 62 is used for the configuration of regulating portion 53. However, the configuration of the regulating portion of the electric vacuum cleaner of the present invention is not limited to such an example. For example, the rotation of electric motor 52 may be converted to the reciprocating driving by a crank shaft and a connecting rod to move movable element 63.

Moreover, in the present exemplary embodiment, elastic member 56 includes a compression spring that stretches in substantially the same direction as the driving direction of driving unit 54 as an elastic body, and the power of driving unit 54 is transmitted to dust removing element 55 through the compression spring.

According to such a configuration, a spring load and a spring constant of elastic member 56 can be arbitrarily set. Thus, resonance frequency 72 can also be arbitrarily set, so that a degree of freedom in design of driving unit 54 and dust removing element 55 increases.

Furthermore, more efficient dust removal can be realized by bringing the resonance frequency of the corrugation itself of filter 40 close to the frequency of dust removing element 55.

As the compression spring itself has less variation in the spring constant and is less likely to change over the years, reliability is improved and stability is also improved. As the frequency of dust removing element 55 is stabilized, the amplitude of dust removing element 55 is stabilized with respect to the vibration frequency of driving unit 54, and the dust removing performance can be stably obtained at high level.

### SECOND EXEMPLARY EMBODIMENT

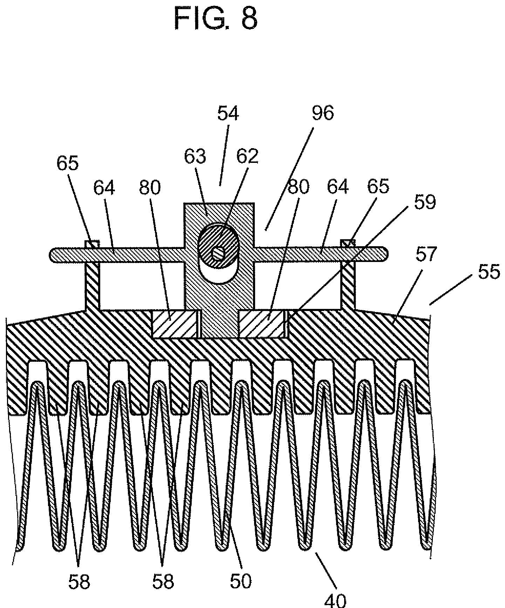

A configuration of dust removing unit 96 in an electric vacuum cleaner according to a second exemplary embodiment of the present invention will be described in detail with reference to the drawings. FIG. 8 is a partial cross-sectional view showing a configuration of filter 40 and dust removing unit 96 in the electric vacuum cleaner according to the second exemplary embodiment of the present invention. The same reference numerals are denoted on the portions same as the portions described in the first exemplary embodiment, and the descriptions thereof are omitted. The configuration of the entire electric vacuum cleaner according to the present exemplary embodiment is similar to the configuration of electric vacuum cleaner 49 shown in FIG. 1 and FIG. 2.

As shown in FIG. 8, dust removing unit 96 of the present exemplary embodiment differs from dust removing unit 45 of the first exemplary embodiment in that a rubber member arranged in a gap in groove part 59 is used for the elastic body of elastic member 80. The elastic body of elastic member 80 includes two rectangular solid bodies made of rubber, and is arranged so as to sandwich movable element 63 in groove part 59. Thus, the rubber member stretches when movable element 63 is driven in groove part 59, so that the movement is transmitted to dust removing element 55 through elastic member 80.

The high polymer material of the rubber member and the like has both properties of spring property and damper property for attenuating the vibration. Thus, if the elastic body of elastic member 80 is made of rubber, a peak of the amplitude in resonance frequency 72 becomes gradual as compared to the case in which the compression spring is used for the elastic body, as shown in FIG. 7. Therefore, the peak of the amplitude is reduced but resonance frequency region 73 is enlarged as compared to the case in which the spring is used, whereby the frequency settable range expands and the degree of freedom in design increases. Furthermore, since the material itself is stretchable, the rubber can be arranged in a narrow gap, and hence the degree of freedom in arrangement increases.

In the present exemplary embodiment, an example in which the rubber is used for the material of the elastic body of elastic member 80 has been described, but a soft material such as elastomer or foam resin may be used. Furthermore, in the present exemplary embodiment, an example in which two elastic members 80 are used has been described, but movable element 63 may be arranged at the middle of single elastic member 80.

In the present exemplary embodiment, from the viewpoint of easy production and longer lifespan of filter 40, the elastic body of elastic member 80 is configured by a soft material such as rubber or elastomer, and the soft material is arranged in the gap between driving unit 54 and dust removing element 55.

### THIRD EXEMPLARY EMBODIMENT

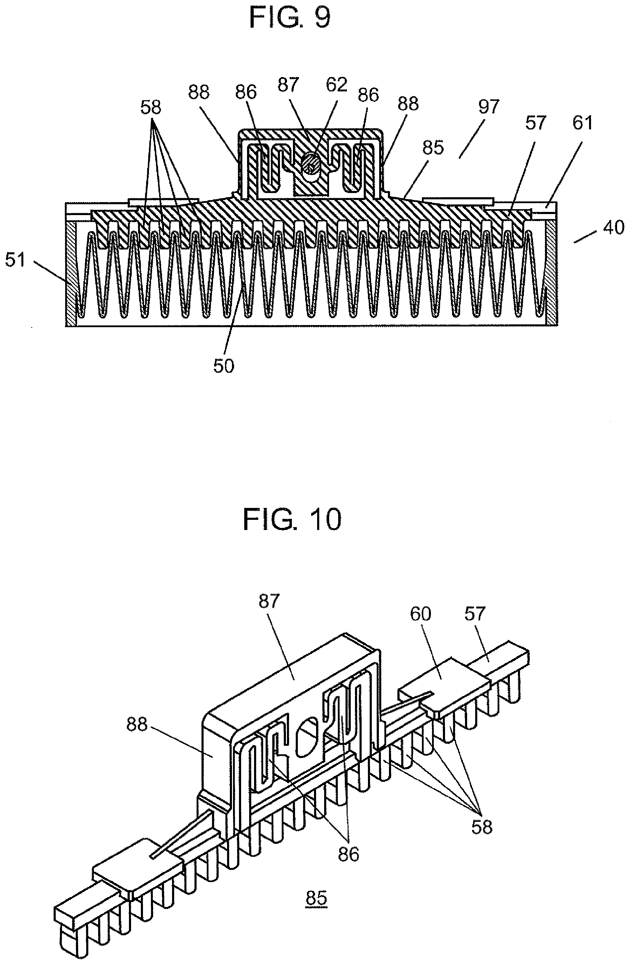

A configuration of dust removing unit 97 in an electric vacuum cleaner according to a third exemplary embodiment of the present invention will be described in detail with reference to the drawings. FIG. 9 is a cross-sectional view showing a configuration of filter 40 and dust removing unit 97 in the electric vacuum cleaner according to the third exemplary embodiment of the present invention, and FIG. 10 is a perspective view showing a configuration of dust removing element 85 of the electric vacuum cleaner. The same reference numerals are denoted on the portions same as the portions described in the first exemplary embodiment, and the descriptions thereof are omitted. The configuration of the entire electric vacuum cleaner according to the present exemplary embodiment is similar to the configuration of electric vacuum cleaner 49 shown in FIG. 1 and FIG. 2.

As shown in FIG. 9 and FIG. 10, dust removing unit 97 of the present exemplary embodiment differs from the configuration of dust removing unit 45 of the first exemplary embodiment in that dust removing element 85, elastic member 86, movable element 87, and one part of the regulating portion (portion excluding eccentric cam 62) are integrally formed with an identical material.

Movable element 87 is configured in a T-shape, and inscribes eccentric cam 62 in a void at the center portion to convert the rotation of eccentric cam 62 to reciprocating driving. Both end portions of the T-shape are supported by two plate spring portions 88. Plate spring portion 88 is arranged in the perpendicular direction with a lower end supported by bone part 57. Plate spring portion 88 supports movable element 87 at an upper end and is arranged such that movable element 87 is movable in the same direction as the operating direction of dust removing element 85. Plate spring portion 88 is integrally configured with dust removing element 85, where the stress on plate spring portion 88 at the time of movement is reduced by making the thickness thin (e.g., thickness of 0.3 mm). The movement of dust removing element 85 in the perpendicular direction can be suppressed by the presence of plate spring portion 88.

Therefore, a mechanism (excluding eccentric cam 62) of the regulating portion for converting the rotation of eccentric cam 62 to reciprocating driving is also integrally formed with the material identical to dust removing element 85.

Elastic member 86 is formed in a meandering form. Elastic member 86 produces spring property by being displaced, and is arranged at two areas on both sides in the movable direction of movable element 87. One end of elastic member 86 is connected to movable element 87, and the other end is connected to the upper part of bone part 57. Thus, elastic member 86 stretches when movable element 87 is reciprocatingly driven, and the movement is transmitted to bone part 57 through elastic member 86.

As described above, according to the present exemplary embodiment, the number of components can be reduced and the manufacturing cost can be reduced (reduction in occurrence of defected article by reduction in component cost and reduction in assembly task) by integrally forming dust removing element 85, elastic member 86, and movable element 87. Furthermore, since the components are integrally formed, wear and noise between the components do not occur and positional accuracy can be improved.

### FOURTH EXEMPLARY EMBODIMENT

Filter 90 and dust removing unit 110 in an electric vacuum cleaner according to a fourth exemplary embodiment of the present invention will be described in detail with reference to the drawings.

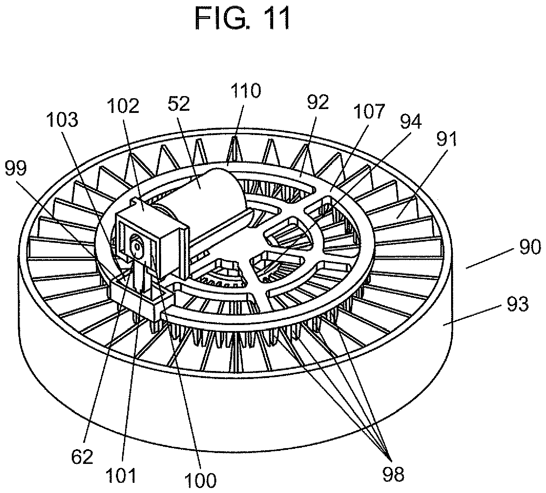

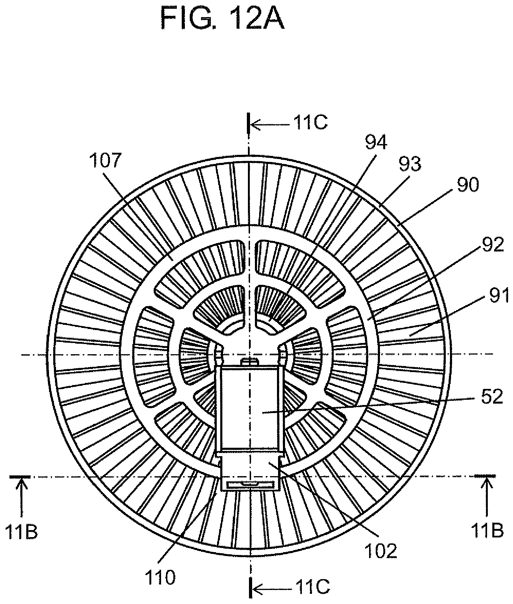

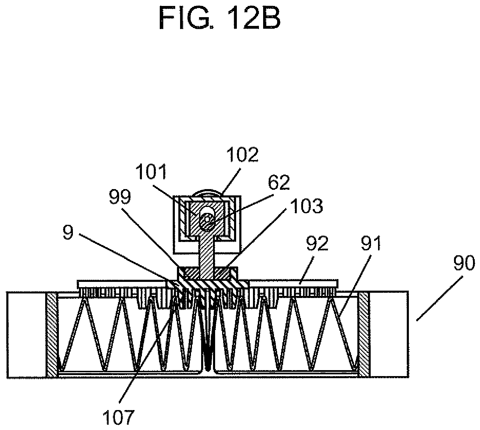

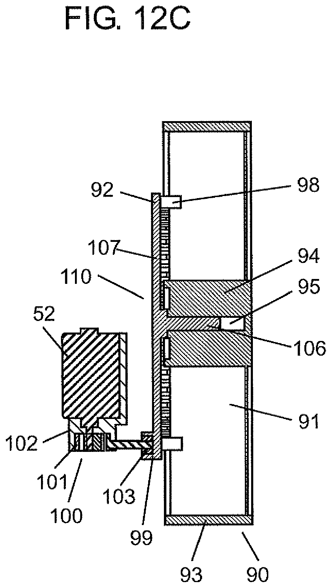

FIG. 11 is a perspective view showing a configuration of filter 90 and dust removing unit 110 of the electric vacuum cleaner according to the fourth exemplary embodiment of the present invention, FIG. 12A is a front view showing a configuration of filter 90 and dust removing unit 110 of the electric vacuum cleaner, FIG. 12B is a cross-sectional view showing a configuration of filter 90 and dust removing unit 110 of the electric vacuum cleaner, and FIG. 12C is a cross-sectional view showing a configuration of filter 90 and dust removing unit 110 of the electric vacuum cleaner. The same reference numerals are denoted on the portions same as the portions described in the first exemplary embodiment, and the descriptions thereof are omitted. The configuration of the entire electric vacuum cleaner according to the present exemplary embodiment is similar to the configuration of electric vacuum cleaner 49 shown in FIG. 1 and FIG. 2.

As shown in FIG. 11, and FIG. 12A to FIG. 12C, the present exemplary embodiment differs from the first exemplary embodiment in that film body 91 of filter 90 is not parallel corrugated and has one end of the corrugation spread in a disc shape, and in that dust removing element 92 is formed in a circular shape in accordance with the configuration of the corrugation of film body 91. The details will be described below.

Filter 90 is integrally molded with resin such that film body 91, in which one end of the corrugation is spread to a disc shape and ridge lines of the corrugation are radially formed, is sandwiched between outer frame body 93 and inner frame body 94 of cylindrical shape. Bearing hole 95 is formed at the center of inner frame body 94.

Dust removing element 92 has shaft part 106 fitted to bearing hole 95 arranged at the center, and circular bone part 107 having shaft part 106 as center is formed. A plurality of nail parts 98 to be arranged in a valley of each corrugation of filter 90 are radially arranged on a lower side of circular bone part 107. That is, nail part 98 is configured to be freely turnable in an arcuate form with shaft part 106 as the center. Groove part 99 is arranged in a tangent direction of a circle of bone part 107 at one area on an upper side of bone part 107 (see FIG. 11).

Regulating portion 100 includes eccentric cam 62 securely arranged at the shaft center of electric motor 52, and movable element 101, inscribed to eccentric cam 62, for converting the rotation to reciprocating driving. Movable element 101 is configured with one end of the lower part arranged in groove part 99 of dust removing element 92 and so that the driving direction of movable element 101 coincides with the tangent direction of the circle of bone part 107.

Movable element 101 is supported by guide 102 in a slidably moving manner with the driving direction as the horizontal left and right direction. Movable element 101 is controlled such that the reciprocating driving becomes linear. Guide 102 also supports electric motor 52, and is supported by inner lid 46 shown in FIG. 2.

Elastic member 103 includes a rectangular solid body made of rubber as an elastic body. Elastic member 103 is arranged in groove part 99, and has a hole on the upper side from the middle. One end at the lower part of movable element 101 is inserted to the hole. Elastic member 103 thus stretches when movable element 101 is driven in groove part 99, and the movement is transmitted to dust removing element 92.

Gap C is formed between nail part 98 of dust removing element 92 and film body 91 of filter 90. Gap C is an important condition for dust removing element 92 to freely move and for filter 90 not to inhibit the resonance of dust removing element 92. In the present exemplary embodiment, about 80% (e.g., 0.8 mm) of 1/2 of the reciprocating stroke of movable element 101 is set as gap C. If gap C is between 20% and 150% (10% to 75% of reciprocating stroke of movable element 101) of 1/2 (eccentric amount of electric motor 52 and eccentric cam 62) of the reciprocating stroke of movable element 101, dust removing element 92 resonates and the dust removing effect of filter 90 is enhanced. In order to further enhance the effect, gap C is desirably between 50% and 120% (25% to 60% of reciprocating stroke of movable element 101) of 1/2 (eccentric amount of electric motor 52 and eccentric cam 62) of the reciprocating stroke of movable element 101.

Gap C not only improves the resonance condition of dust removing element 92, but an inertia force of dust removing element 92 generated by gap C when nail part 98 makes contact with film body 91 can also act on film body 91. Thus, a strong vibration can be generated on filter 90, thus further improving the dust removing performance.

In the present exemplary embodiment as well, the reciprocating driving by electric motor 52 is transmitted to dust removing element 92 through elastic member 103, so that an impact noise is not generated between movable element 101 and dust removing element 55. Therefore, an electric vacuum cleaner capable of removing the dust attached to filter 90 with low noise and at high efficiency can be provided.

As described above, similarly to other exemplary embodiments, the reciprocating vibration of movable element 101 can be transmitted to dust removing element 92 through elastic member 103 even if the ridge line direction of the corrugation of filter 90 is radial and the reciprocating vibration direction of dust removing element 92 is arcuate. Therefore, the resonance condition is satisfied in dust removing element 92. The amplitude of dust removing element 92 increases by the resonance action, and the dust removing effect on filter 90 can be enhanced.

In the present exemplary embodiment, an example in which rubber is used for the material of elastic member 103 has been described, but a metal spring or a soft material such as elastomer or foam resin may also be used.

As described above, the driving of the driving unit is transmitted to the dust removing element through the elastic member in the electric vacuum cleaner of each exemplary embodiment. Thus, the resonance condition is satisfied mainly by the spring constant of the elastic member and the weight of the dust removing element, and the amplitude of the dust removing element can be increased by approaching the frequency of the driving unit closer to the resonance frequency. Therefore, the filter arranged close to the dust removing element can greatly vibrate, and the dust can be efficiently removed. As the reciprocating driving of the driving unit is transmitted to the dust removing element through the elastic body, the impact noise is not generated between the driving unit and the dust removing element. Thus, an electric vacuum cleaner capable of removing the dust attached to the filter with low noise and at high efficiency can be provided.

In the electric vacuum cleaner of each exemplary embodiment, gap C is arranged between the dust removing element and the filter, and gap C is set in a predetermined range with respect to 1/2 of the reciprocating driving amplitude of the driving unit.

According to such a configuration, the filter carries out an attenuating action on the resonance operation of the dust removing element, and thus the influence on the resonance operation of the dust removing element can be reduced by providing gap C.

However, since the dust removing action does not occur if the contact of the dust removing element to the filter is not made, an appropriate condition exists for gap C between the dust removing element and the filter. In other words, it is a prerequisite that gap C from 20% to 150% of 1/2 of the reciprocating driving amplitude of the driving unit is provided, where 50% to 120% is a more preferable condition. This is a condition in which the resonance of the dust removing element is not inhibited by the filter, and the dust removing element makes contact with the filter to enhance the dust removing effect. Thus, if gap C is set to such a condition, the resonance is generated in the dust removing element thus increasing the amplitude, and the impact on the filter is increased so that the dust removing performance can be improved.

Furthermore, from the viewpoint of motor lock prevention of the driving unit, in the electric vacuum cleaner of each exemplary embodiment, the driving unit preferably includes a motor, which is electrically rotated, and a regulating portion for converting the rotation of the motor to the reciprocating linear driving, and the tolerable deformation amount of the elastic member produced by the driving deviation of the driving unit and the dust removing element is preferably greater than the reciprocating driving amount of the regulating portion.

Accordingly, the tolerable deformation amount of the elastic member is greater than the reciprocating driving amount of the converting portion, and the motor can be rotated without being locked and the abnormal heat generation by the overcurrent of the motor can be prevented even if the dust removing element is stopped, for example.

### INDUSTRIAL APPLICABILITY

As described above, according to the present invention, the dust attached to the filter can be removed with low noise and at high efficiency using the resonance action, and hence it is useful as an electric vacuum cleaner equipped with a filter for filtering dust, and the like.

### REFERENCE MARKS IN THE DRAWINGS

- 1: vacuum cleaner main body
- 3: wheel
- 4: caster
- 5: dust collecting case
- 6: suction port
- 7: suction hose
- 8: extended tube
- 9: suction tool
- 21: electric blower
- 22: ventilation port
- 26: partition wall
- 30: intake port
- 31: dust collecting box
- 32: exhaust port
- 33: dust collecting lid
- 34: middle case
- 35: filter accommodation case
- 36: inclined tube A
- 37: primary filter
- 38: inclined tube B
- 39: fine dust tube
- 40, 90: filter
- 41: packing
- 42: canopy-like portion
- 43: bottom lid
- 45, 96, 97, 110: dust removing unit
- 46: inner lid
- 49: electric vacuum cleaner
- 50, 91: film body
- 51: frame body
- 52: electric motor
- 53, 100: regulating portion
- 54: driving unit
- 55, 85, 92: dust removing element
- 56, 80, 86, 103: elastic member
- 57, 107: bone part
- 58, 98: nail part
- 59, 99: groove part
- 60: guide blade part
- 61: rail
- 62: eccentric cam
- 63, 87, 101: movable element
- 64: guide pin
- 65: guide hole
- 70, 71: stroke
- 72: resonance frequency
- 73: resonance frequency region
- 88: plate spring portion
- 93: outer frame body
- 94: inner frame body
- 95: bearing hole
- 102: guide
- 106: shaft part

## Claims

1. An electric vacuum cleaner comprising:
an electric blower (21);
a filter (40; 90) for catching dust suctioned by the electric blower (21); and
a dust removing unit (45; 96; 97; 110) for removing the dust attached to the filter (40; 90), wherein
the dust removing unit (45; 96; 97; 110) includes:
a driving unit (54) having a regulating portion (53; 100) for linear driving, and being adapted to reciprocatingly drive;
a dust removing element (55; 85; 92) being arranged close to the filter (40; 90) and being movable in a direction substantially identical to a direction of the reciprocating driving of the driving unit (54); and
an elastic member (56; 80; 86; 103) being adapted to transmit the reciprocating driving of the driving unit (54) to the dust removing element (55; 92) through an elastic body that stretches in a direction substantially identical to the driving direction of the driving unit (54), and
an amplitude of the reciprocating driving of the dust removing element (55) is increased by a resonance action generated by the elastic member (56) to vibrate the filter (40; 90),
**characterized in that**
the filter (40; 90) has a film body (50; 91) in a wave form to form corrugations, wherein
the dust removing element (55; 92) has a bone part (57; 107),
wherein a plurality of nail parts (58; 98) to be arranged in a valley of each corrugation of the filter (40; 90) are arranged on a lower side of the bone part (57; 107).

2. The electric vacuum cleaner according to claim 1, wherein the elastic body arranged in the elastic member (56) is a stretchable spring, the driving unit (54) and the dust removing element (55) being biased by the spring.

3. The electric vacuum cleaner according to claim 1, wherein the elastic body arranged in the elastic member at least includes a soft material containing at least one of a rubber and an elastomer, the soft material being arranged in a gap between the driving unit (54) and the dust removing element.

4. The electric vacuum cleaner according to claim 1, wherein the dust removing element and the elastic member are integrally formed with an identical material.

5. The electric vacuum cleaner according to claim 4, wherein the dust removing element (85), the elastic member (86), and the regulating portion (62) are integrally formed with an identical material.

6. The electric vacuum cleaner according to any one of claims 1 to 5, wherein
a gap (C) is formed between the dust removing element (55; 92) and the filter (40; 90); and
the gap is 10% to 75% of the amplitude of the reciprocating driving of the driving unit (54).

7. The electric vacuum cleaner according to any one of claims 1 to 5, wherein
the driving unit (54) includes an electrically rotating motor (52);
the regulating portion (53) converts rotational driving of the motor (52) to a reciprocating linear driving; and
a tolerable deformation amount of the elastic member produced by a driving deviation of the driving unit (54) and the dust removing element is greater than a reciprocating driving amount of the regulating portion.

8. The electric vacuum cleaner according to claim 6, wherein
the driving unit (54) includes an electrically rotating motor (52);
the regulating portion converts rotational driving of the motor (52) to reciprocating linear driving; and
a tolerable deformation amount of the elastic member produced by a driving deviation of the driving unit (54) and the dust removing element is greater than a reciprocating driving amount of the regulating portion.

9. The electric vacuum cleaner according to any one of claims 1 to 6,
wherein
the driving unit (54) transmits the reciprocating driving to the elastic member (56) and the elastic member (56) transmits the reciprocating driving with the increased amplitude to the dust removing element (55).

10. The electric vacuum cleaner according to claims 9, wherein
the regulating portion (53) includes a movable element (63), and
the elastic member (56) contacts the movable element (63) on one end and contacts the dust removing element (55) on the other end, whereby movement of the movable element (63) is transmitted to the dust removing element (55) via the elastic member (56).

11. The electric vacuum cleaner according to claims 9, wherein
a plurality the nail parts (55; 92) make contact with side faces of the corrugations of the filter (40; 90) to vibrate the corrugations.

## Patentansprüche

1. Elektrischer Staubsauger, der Folgendes umfasst:
ein elektrisches Gebläse (21);
einen Filter (40; 90) zum Auffangen von Staub, der durch das elektrische Gebläse (21) angesaugt wird; und
eine Staubentfernungseinheit (45; 96; 97; 110) zum Entfernen des Staubs, der an dem Filter (40; 90) haftet, wobei
die Staubentfernungseinheit (45; 96; 97; 110) Folgendes umfasst:
eine Antriebseinheit (54), die einen Regulierabschnitt (53; 100) für einen linearen Antrieb aufweist und dafür ausgelegt ist, hin und her anzutreiben;
ein Staubentfernungselement (55; 85; 92), das nahe an dem Filter (40; 90) angeordnet und in einer Richtung beweglich ist, die im Wesentlichen mit einer Richtung des hin- und herbewegenden Antriebs der Antriebseinheit (54) identisch ist; und
ein elastisches Element (56; 80; 86; 103), das dafür ausgelegt ist, den hin- und herbewegenden Antrieb der Antriebseinheit (54) auf das Staubentfernungselement (55; 92) durch einen elastischen Körper zu übertragen, der sich in einer Richtung erstreckt, die im Wesentlichen mit der Antriebsrichtung der Antriebseinheit (54) identisch ist, und
eine Amplitude des hin- und herbewegenden Antriebs des Staubentfernungselements (55) durch eine Resonanzwirkung erhöht wird, die durch das elastische Element (56) erzeugt wird, um den Filter (40; 90) zu vibrieren,
**dadurch gekennzeichnet,**
**dass** der Filter (40; 90) einen Folienkörper (91; 50) in einer Wellenform aufweist, um Wellungen zu bilden, wobei
das Staubentfernungselement (55; 92) ein Knochenteil (57; 107) aufweist,
wobei eine Vielzahl von Stiftteilen (58; 98), die in einer Vertiefung der einzelnen Wellungen des Filters (40; 90) anzuordnen ist, an einer unteren Seite des Knochenteils (57; 107) angeordnet wird.

2. Elektrischer Staubsauger nach Anspruch 1, wobei der elastische Körper, der in dem elastischen Element (56) angeordnet ist, eine dehnbare Feder ist, wobei die Antriebseinheit (54) und das Staubentfernungselement (55) durch die Feder vorgespannt werden.

3. Elektrischer Staubsauger nach Anspruch 1, wobei der elastische Körper, der in dem elastischen Element angeordnet ist, mindestens ein weiches Material umfasst, das mindestens ein Gummi oder ein Elastomer enthält, wobei das weiche Material in einem Spalt zwischen der Antriebseinheit (54) und dem Staubentfernungselement angeordnet ist.

4. Elektrischer Staubsauger nach Anspruch 1, wobei das Staubentfernungselement und das elastische Element mit einem identischen Material einstückig gebildet sind.

5. Elektrischer Staubsauger nach Anspruch 4, wobei das Staubentfernungselement (85), das elastische Element (86) und der Regulierabschnitt (62) mit einem identischen Material einstückig gebildet sind.

6. Elektrischer Staubsauger nach einem der Ansprüche 1 bis 5, wobei
ein Spalt (C) zwischen dem Staubentfernungselement (55; 92) und dem Filter (40; 90) gebildet ist; und
der Spalt 10 % bis 75 % der Amplitude des hin- und herbewegenden Antriebs der Antriebseinheit (54) umfasst.

7. Elektrischer Staubsauger nach einem der Ansprüche 1 bis 5, wobei
die Antriebseinheit (54) einen elektrisch drehenden Motor (52) umfasst;
der Regulierabschnitt (53) einen Drehantrieb des Motors (52) in einen hin- und herbewegenden Linearantrieb umwandelt; und
ein tolerierbares Verformungsausmaß des elastischen Elements, das durch eine Antriebsabweichung der Antriebseinheit (54) und des Staubentfernungselements erzeugt wird, größer ist als ein Ausmaß des hin- und herbewegenden Antriebs des Regulierabschnitts.

8. Elektrischer Staubsauger nach Anspruch 6, wobei
die Antriebseinheit (54) einen elektrisch drehenden Motor (52) umfasst;
der Regulierabschnitt einen Drehantrieb des Motors (52) in einen hin- und herbewegenden Linearantrieb umwandelt; und
ein tolerierbares Verformungsausmaß des elastischen Elements, das durch eine Antriebsabweichung der Antriebseinheit (54) und des Staubentfernungselements erzeugt wird, größer ist als ein Ausmaß des hin- und herbewegenden Antriebs des Regulierabschnitts.

9. Elektrischer Staubsauger nach einem der Ansprüche 1 bis 6, wobei
die Antriebseinheit (54) den hin- und herbewegenden Antrieb auf das elastische Element (56) überträgt und das elastische Element (56) den hin- und herbewegenden Antrieb mit der erhöhten Amplitude auf das Staubentfernungselement (55) überträgt.

10. Elektrischer Staubsauger nach Anspruch 9, wobei
der Regulierabschnitt (53) ein bewegliches Element (63) umfasst und
das elastische Element (56) das bewegliche Element (63) an einem Ende berührt und das Staubentfernungselement (55) an dem anderen Ende berührt, wodurch die Bewegung des beweglichen Elements (63) über das elastische Element (56) auf das Staubentfernungselement (55) übertragen wird.

11. Elektrischer Staubsauger nach Anspruch 9, wobei
eine Vielzahl der Stiftteile (55; 92) Seitenflächen der Wellungen des Filters (40; 90) berühren, um die Wellungen zu vibrieren.

## Revendications

1. Aspirateur électrique comprenant :
une soufflante électrique (21) ;
un filtre (40 ; 90) destiné à capter la poussière aspirée par la soufflante électrique (21) ; et
une unité de retrait de poussière (45 ; 96 ; 97 ; 110) destinée à retirer la poussière fixée au filtre (40 ; 90), où
l'unité de retrait de poussière (45 ; 96 ; 97 ; 110) comprend :
une unité d'entraînement (54) ayant une partie de régulation (53 ; 100) pour un entraînement linéaire, et adaptée pour effectuer un entraînement en va-et-vient ;
un élément de retrait de poussière (55 ; 85 ; 92) agencé à proximité du filtre (40 ; 90) et mobile dans une direction sensiblement identique à une direction de l'entraînement en va-et-vient de l'unité d'entraînement (54) ; et
un élément élastique (56 ; 80 ; 86 ; 103) adapté pour transmettre l'entraînement en va-et-vient de l'unité d'entraînement (54) à l'élément de retrait de poussière (55 ; 92) par le biais d'un corps élastique qui s'étire dans une direction sensiblement identique à la direction d'entraînement de l'unité d'entraînement (54) ; et
une amplitude de l'entraînement en va-et-vient de l'élément de retrait de poussière (55) est accrue par une action de résonance générée par l'élément élastique (56) pour faire vibrer le filtre (40 ; 90),
**caractérisé en ce que**
le filtre (40 ; 90) a un corps en film (50 ; 91) en forme d'onde pour former des ondulations, où
l'élément de retrait de poussière (55 ; 92) a une partie d'ossature (57 ; 107),
où une pluralité de parties de griffes (58 ; 98) à agencer dans un creux de chaque ondulation du filtre (40 ; 90) sont agencées sur un côté inférieur de la partie d'ossature (57; 107).

2. Aspirateur électrique selon la revendication 1, dans lequel le corps élastique agencé dans l'élément élastique (56) est un ressort étirable, l'unité d'entraînement (54) et l'élément de retrait de poussière (55) étant sollicités par le ressort.

3. Aspirateur électrique selon la revendication 1, dans lequel le corps élastique agencé dans l'élément élastique comprend au moins un matériau mou contenant au moins l'un d'un caoutchouc et d'un élastomère, le matériau mou étant agencé dans un espace entre l'unité d'entraînement (54) et l'élément de retrait de poussière.

4. Aspirateur électrique selon la revendication 1, dans lequel l'élément de retrait de poussière et l'élément élastique sont formés solidairement avec un matériau identique.

5. Aspirateur électrique selon la revendication 4, dans lequel l'élément de retrait de poussière (85), l'élément élastique (86) et la partie de régulation (62) sont formés solidairement avec un matériau identique.

6. Aspirateur électrique selon l'une quelconque des revendications 1 à 5, dans lequel
un espace (C) est formé entre l'élément de retrait de poussière (55 ; 92) et le filtre (40 ; 90) ; et
l'espace est de 10 % à 75 % de l'amplitude de l'entraînement en va-et-vient de l'unité d'entraînement (54).

7. Aspirateur électrique selon l'une quelconque des revendications 1 à 5, dans lequel
l'unité d'entraînement (54) comprend un moteur rotatif électrique (52) ;
la partie de régulation (53) convertit l'entraînement en rotation du moteur (52) en un entraînement linéaire en va-et-vient ; et
une quantité de déformation tolérable de l'élément élastique produite par un écart d'entraînement de l'unité d'entraînement (54) et de l'élément de retrait de poussière est supérieure à une quantité d'entraînement en va-et-vient de la partie de régulation.

8. Aspirateur électrique selon la revendication 6, dans lequel
l'unité d'entraînement (54) comprend un moteur rotatif électrique (52) ;
la partie de régulation convertit l'entraînement en rotation du moteur (52) en un entraînement linéaire en va-et-vient ; et
une quantité de déformation tolérable de l'élément élastique produite par un écart d'entraînement de l'unité d'entraînement (54) et de l'élément de retrait de poussière est supérieure à une quantité d'entraînement en va-et-vient de la partie de régulation.

9. Aspirateur électrique selon l'une quelconque des revendications 1 à 6, dans lequel
l'unité d'entraînement (54) transmet l'entraînement en va-et-vient à l'élément élastique (56) et l'élément élastique (56) transmet l'entraînement en va-et-vient avec l'amplitude accrue à l'élément de retrait de poussière (55).

10. Aspirateur électrique selon la revendication 9, dans lequel
la partie de régulation (53) comprend un élément mobile (63), et
l'élément élastique (56) est en contact avec l'élément mobile (63) sur une extrémité et en contact avec l'élément de retrait de poussière (55) sur l'autre extrémité, moyennant quoi le déplacement de l'élément mobile (63) est transmis à l'élément de retrait de poussière (55) par l'intermédiaire de l'élément élastique (56).

11. Aspirateur électrique selon la revendication 9, dans lequel
une pluralité de pièces de griffes (55 ; 92) établissement un contact avec les faces latérales des ondulations du filtres (40 ; 90) pour faire vibrer les ondulations.
